Europäisches Patentamt

European Patent Office

Office européen des brevets

(11) Publication number: **0 442 649 A1**

# (12) EUROPEAN PATENT APPLICATION

(21) Application number: **91300944.5**

(22) Date of filing: **05.02.91**

(51) Int. Cl.⁵: **G06F 15/62, H04N 1/46**

(30) Priority: **08.02.90 US 477304**

(43) Date of publication of application:
**21.08.91 Bulletin 91/34**

(84) Designated Contracting States:
**DE FR GB**

(71) Applicant: **International Business Machines Corporation**
**Old Orchard Road**
**Armonk, N.Y. 10504 (US)**

(72) Inventor: **Tuel, William G., Jr.**
**6042 Monteverde Drive**
**San Jose, California 95120 (US)**

(74) Representative: **Atchley, Martin John Waldegrave**
**IBM United Kingdom Limited Intellectual Property Department Hursley Park**
**Winchester Hampshire SO21 2JN (GB)**

(54) **Converting vector image data into raster image data.**

(57) The present invention relates to apparatus for converting data representing a vector image capable of reproducing a relatively large number of colours into data representing a raster image. The apparatus of the invention comprises means (16, 18) for converting the vector image data into data for at least two intermediate images each capable of representing a smaller number of colours than are available from the vector image data, means (20, 22) for converting the intermediate image data into data representing intermediate raster images, and means (24, 26, 30) for combining the intermediate raster image data into data (28) for a final raster image capable of reproducing a number of colours which is greater than the number of colours which can be represented by the intermediate images.

EP 0 442 649 A1

Fig. 1

## CONVERTING VECTOR IMAGE DATA INTO RASTER IMAGE DATA

The present invention relates generally to the generation of data for representing graphical images, and more specifically to conversion of data representing a vector image into data representing a raster image.

Displays for displaying graphical images are becoming increasingly common for use with computer systems. Higher quality colour displays can show many colours at the same time, with eight or more bits per pixel (picture element) colour resolution not being uncommon.

Some display systems, such as those utilising a computer program called graPHIGS, a product available from International Business Machines Corporation, generate images on a CRT display screen using information supplied in data structures defining the various elements displayed on the screen. Display systems of this type use what is known as vector image data for displaying images. Other graphical displays use data forming a raster image, which is a rectangular array of pixels with each pixel being separately addressable for displaying an image. All these displays use a predetermined number of bits for each pixel in the array to determine the display colour for that pixel.

It is sometimes desirable to convert the data representing a vector image into data representing a raster image for display on another device or for printing. Such a capability is provided with the graPHIGS product which can generate a graphical data display manager (GDDM) data file from data representing a selected screen image. The GDDM data file can then be converted to bitmaps suitable for a raster image. One problem with such conversion is that the graPHIGS product generates data which can display up to 256 different colours on a screen (8 bit colour resolution), while the GDDM compatible files can be used to display only 16 colours (4 bit colour resolution). Thus, much colour information is lost when converting the data for use in a graPHIGS display which utilises the full palette of available colours.

The object of the present invention is to provide an improved apparatus and method for converting data representing an image in one form and in a predetermined number of colours into data representing the image in another form and in approximately the same number of colours.

The present invention relates to apparatus for converting data representing a vector image capable of reproducing a relatively large number of colours into data representing a raster image. The apparatus of the invention comprises means for converting the vector image data into data for at least two intermediate images each capable of representing a smaller number of colours than are available from the vector image data, means for converting the intermediate image data into data representing intermediate raster images, and means for combining the intermediate raster image data into data for a final raster image capable of reproducing a number of colours which is greater than the number of colours which can be represented by the intermediate images.

The present invention also relates to a method of converting data representing a vector image capable of reproducing a relatively large number of colours into data representing a raster image. The method of the invention comprises converting the vector image data into data for at least two intermediate images each capable of representing a smaller number of colours than are available from the vector image data, converting the intermediate image data into data representing intermediate raster images, and combining the intermediate raster image data into data for a final raster image capable of reproducing a number of colours which is greater than the number of colours which can be represented by the intermediate images.

Therefore, in accordance with the present invention, a system and method for converting data representing a vector image into data representing a raster image writes the vector image data, having some number of displayable colours, into more than one intermediate image file. Each intermediate image file can define only a number of colours which is smaller than the number of colours in the original. Separate colour translation tables are used to generate each intermediate file. Proper selection of the colour translation tables causes each intermediate file to contain a portion of the full colour information. The intermediate files are translated to intermediate raster files which are then combined into a single raster image which retains all of the colours of the original vector image.

In order that the invention may be more readily understood an embodiment will now be described with reference to the accompanying drawings in which :-

Figure 1 is a block diagram of a system for generating data representing a full colour raster image from data representing a vector image,

Figure 2 illustrates how the data representing the vector colour image is used,

Figure 3 shows lookup tables used in a preferred embodiment of the invention, and

Figure 4 is a flowchart of a preferred method for generating a raster image from a vector image according to the invention.

The system and method for processing data described below provide a technique for converting data representing one type of image into data representing another type of image. The technique described below is suitable for use in translating data used in a graPHIGS display image into data used for a standard raster image suitable for use with a CRT display device or other display device. It will be appreciated by those skilled in the art that the system and method described below, with suitable adaptation, may be used with other systems in which it is necessary to perform a similar data conversion operation.

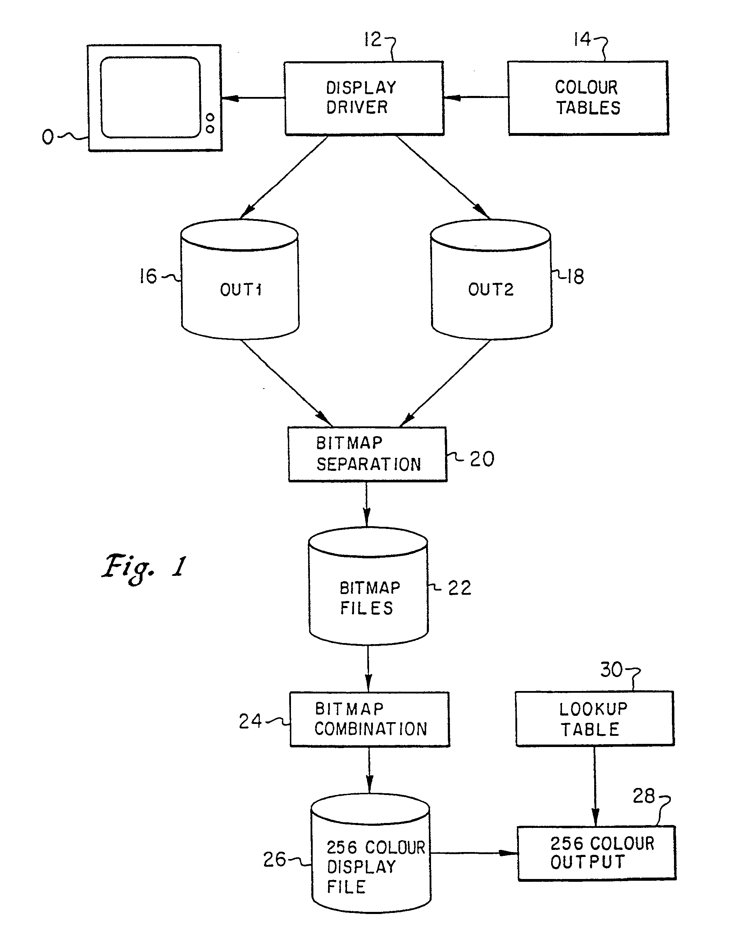

Referring to **Figure 1**, an image device **10** is driven by a display driver **12**. In a preferred embodiment, display driver **12** is a GDDM/graPHIGS display driver. As is known in the art, this type of display driver **12** uses data representing a vector description of an image to be displayed on display **10**. For purposes of the present description, it will be assumed that display driver **12** is able to display up to 256 different colours on display **10** simultaneously.

As is known in the art, 256 different colours can be displayed using an 8-bit colour representation code. In order to provide a wider selection of possible colours for display, it is common to use the 8-bit colour representation code as an index into a lookup table which provides a translation of the 8-bit code into separate codes used for driving red, green, and blue drivers of a colour display. If an 8-bit representation code is used for each colour, over 16 million different colours can be displayed, although only 256 can be displayed at one time.

The graPHIGS display driver **12** uses colour tables **14** to select the colours to be displayed in a known manner. As is also known, such a display driver **12** can drive more than one display device, or workstation, at a time. Workstations may be actual display devices, or they can be files used for capturing display data. In the preferred embodiment, two separate intermediate files **16, 18** are opened as workstations to the display driver **12**, and are used to capture image display data.

When the data for an image currently being displayed on display **10** is captured and written into one of the intermediate files **16, 18**, ADMGDF graphic metafiles are produced. These contain data for images having a vector description format. Each of these files **16, 18** is capable of supporting only 16 colours. This means that colour information from the original image data is lost. Each colour code of the original image data is translated into the code for one of the 16 colours used in the intermediate files **16, 18** through a colour table **14**. As will be described below, proper selection of the colour tables **14** used for each of the files **16, 18** will allow retention of all 256 original colours when the data in files **16, 18** is later combined.

As image data is being generated for display of the images on the display **10**, the data for any desired images can be captured by writing the data into to the intermediate files **16, 18**. The data for each captured image is numbered separately, or otherwise independently identified, with the data for corresponding images in each file **16, 18** preferably having the same identifying number so that they may be easily matched at a later stage.

When all desired image data has been captured, the intermediate files **16, 18** are converted by a bitmap separation program **20** into bitmap files **22**. Commercially available utilities such as the GDDM utility ADMUCDSO can be used to perform this conversion. Four or more separate bitmaps are generated for each image in each intermediate file **16, 18**. Each bitmap has one bit corresponding to each pixel of the resulting raster image display. The four generated bitmaps correspond to the 16 colours provided in the intermediate files **16, 18**. Thus, a total of eight separate bitmaps are generated for each captured image.

A bitmap combination program **24** is then used to combime the eight separate bitmaps corresponding to a single image into a single display file **26** capable of defining up to 256 different colours. This is accomplished by, for each pixel in the raster image, combining the corresponding bit from each of the eight bitmaps for that image into a single byte. Thus, eight separate bitmap files **22**, each having one bit corresponding to each pixel of the resulting image, are combined into a single 256 colour display file **26** which has one byte corresponding to each pixel of the resulting image to be displayed.

The 256 colour display file **26** is then used to form a 256 colour raster image output **28** through the use of a lookup table **30**. Lookup table **30** is a typical lookup table as known in the art, with each 1-byte value in the display file **26** used as an index thereinto. If the colour definitions of lookup table **30** are selected to match those in the colour table **14** used to drive the display **10**, the colour raster image output **28** will form a raster image of the original vector description image having the same colours. If a device used to display the 256 colour output **28** is not capable of producing all of the colours which can be produced by the display **10**, lookup table **30** is preferably defined to produce the closest possible match.

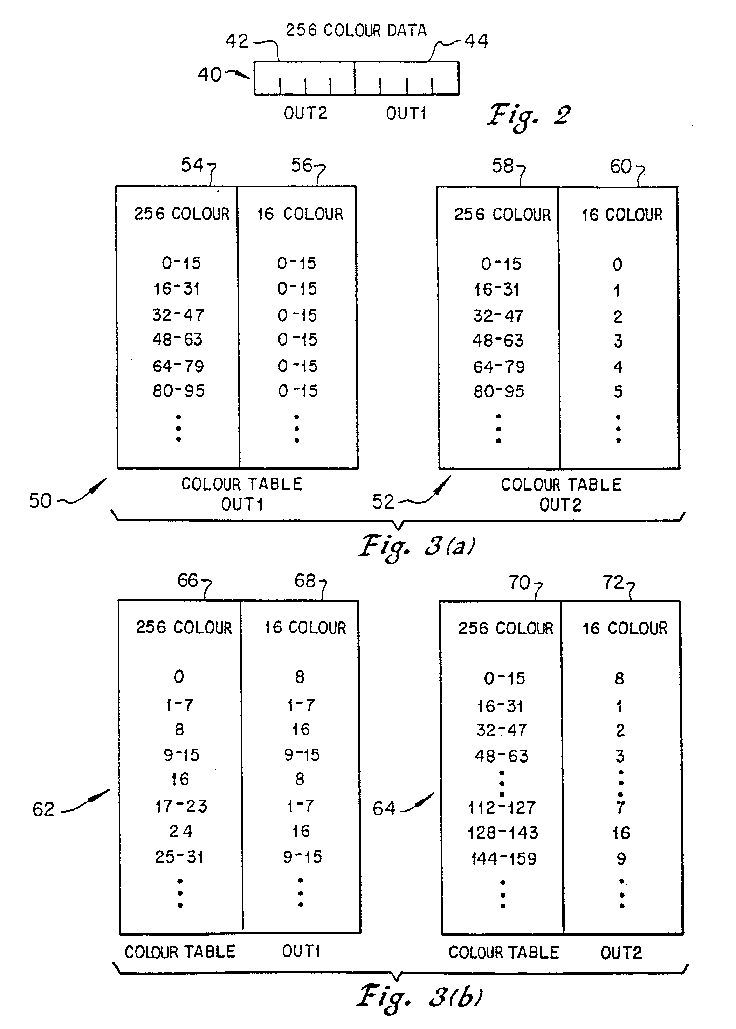

**Figure 2** illustrates how the 8-bit colour image data is divided between the two output files **16, 18**. Each 8-bit code **40** used to drive display **10** is preferably conceptually divided into an upper set of 4 bits **42** and a lower set of 4 bits **44**. The upper set of bits **42** contain the most significant bits of the code. The output file OUT1 **16** corresponds to the lower set of 4 bits **44**, and output file OUT2 **18** corresponds to the upper set of 4 bits **42**. When the 256 colour display file **26** is assembled, the bitmaps are assembled so as to reproduce the 8-bit code **40** for the appropriate pixels.

The colour tables **14** used to produce the intermediate files **16, 18** are shown in **Figure 3(a)**. Colour table **50** is used to generate intermediate file OUT1, and colour table **52** is used to generate intermediate file OUT2. The left-hand column **54** of table **50** shows the various codes which can be used for driving the display **10**, and the right-hand column **56** indicates the corresponding colour defined in intermediate file **16**. It will be recognized that each code in the right-hand column **56** corresponds to the least significant 4 bits of the corresponding code in the left-hand column **54**.

Left-hand column **58** of table **52** also shows the possible colour codes used to drive display **10**, and right-hand column **60** is the corresponding value written to intermediate file **18**. Each code in right-hand column **60** corresponds to the most significant 4 bits of the corresponding code in the left-hand columun **58**.

The tables **50, 52** shown in **Figure 3(a)** represent the ideal case for colour data conversion. In GDDM drivers, colour **8** is a special colour which is always used for the background. When this type of driver is used, it is necessary to translate color **0**, used as the background for driving display **10**, into colour **8** for the GDDM intermediate files **16, 18**. Modified tables **62, 64** for the intermediate files **16, 18**, respectively are shown in **Figure 3(b)**. These colour tables are preferred for use with a GDDM driver, while the colour tables of **Figure 3(a)** can be used for the general case.

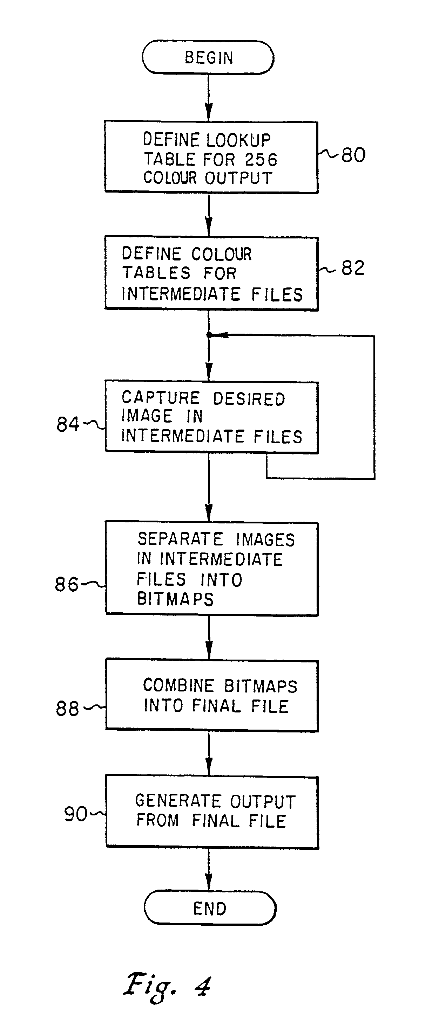

**Figure 4** illustrates the steps used to translate the data for the image displayed on device **10** or to a form suitable for use on a 256 colour raster graphics device. The first step **80** is to define the lookup table for the 256 colour output. This lookup table is the lookup table **30** described in connection with **Figure 1**. The next step **82** is to define colour tables **14** for the intermediate files. These are the colour tables **50** and **52** described in connection with **Figure 3(a)**, or tables **62** and **64** when a GDDM driver is used **Figure 3(a)**.

When data for a desired image is generated, it is captured at **84** into the two intermediate files as described above. The capturing step **84** can be repeated as often as desired, generating corresponding intermediate files **16, 18** for the data for each captured image. The next step **86** is to separate the images in the files **16, 18** into bitmaps. As described above, four separate bitmaps are produced for each file **16, 18**, so that eight separate bitmaps are produced for each captured image. The bitmaps are then combined at **88** into the final file as described in connection with **Figure 1**, and at **90** a raster image data output is generated from the final file. The final output file can be used to display an image on a colour CRT, or on another output display device such as a printer or raster plotter. The output device utilises lookup table **30**, prepared in step **80**, to produce the final display.

The system and method described above are suitable for producing data for a 256 colour raster image from the data for a 256 colour vector description image when only 16 colours are available for use in intermediate files. This is accomplished by generating two output files for each image, with a portion of the colour information contained within each file. Proper combination of the files at a later stage preserves the fill 256 colour image.

It will be appreciated by those skilled in the art that the details of the system and method described above are illustrative only, and can be extended in many ways depending upon the application under consideration. For example, the data for a 256 colour original image is described as being split into two 16 colour intermediate images. However, the described technique can be adapted to situations having different numbers of colours available for display at each stage. For example, if display **10** is capable of displaying 4096 different colours simultaneously, a 12 bit colour identifier could he used by the display driver **12**. In this case, it would be possible to use a third intermediate file in conjunction with files **16** and **18**. In another example, the output display **28** may not be capable of displaying as many colours as is the display **10**, but can display more colours than the limited number available for the intermediate files **16, 18**. In the example described in connection with **Figure 1**, output **28** might be capable of displaying only 32 or 64 different colours simultaneously. However, the same translation technique would be used, with the lookup table **30** providing the correct final translation to translate each of the 256 original colours into the closest corresponding colour available on the display **28**.

**Claims**

1. Apparatus for converting data representing a vector image capable of reproducing a relatively large number of colours into data representing a raster image comprising
   means (16, 18) for converting said vector image data into data for at least two intermediate images each capable of representing a smaller number of colours than are available from said vector image data,
   means (20, 22) for converting said intermediate image data into data presenting intermediate raster images, and
   means (24, 26, 30) for combining said intermediate raster image data into data (28) for a final raster image capable of reproducing a number of colours which is greater than the number of colours which can be represented by said intermediate images.

2. Apparatus as claimed in Claim 1 in which there are two intermediate images and said conversion means (16, 18) utilises the higher order vector image data for one of said intermediate images and the lower order vector image data for the other intermediate image.

3. Apparatus as claimed in Claim 1 or Claim 2 in which said intermediate images are vector images.

4. Apparatus as claimed in any one of the preceding claims in which said vector image data can represent up to 256 colours and said intermediate image data can represent up to 16 colours.

5. Apparatus as claimed in Claim 4 in which said final raster image data can represent up to 256 colours.

6. A method of converting data representing a vector image capable of reproducing a relatively large number of colours into data representing a raster image comprising

converting said vector image data into data for at least two intermediate images each capable of representing a smaller number of colours than are available from said vector image data,

converting said intermediate image data into data representing intermediate raster images, and

combining said intermediate raster image data into data for a final raster image capable of reproducing a number of colours which is greater than the number of colours which can be represented by said intermediate images.

7. A method as claimed in Claim 6 in which there are two intermediate images and comprising utilising the higher order vector image data for one of said intermediate images and the lower order vector image data for the other intermediate image.

8. A method as claimed in Claim 6 or Claim 7 in which said intermediate images are vector images.

9. A method as claimed in any one of Claims 6, 7 or 8 in which said vector image data can represent up to 256 colours and said intermediate image data can represent up to 16 colours.

10. A method as claimed in Claim 9 in which said final raster image data can represent up to 256 colours.

Fig. 1

256 COLOUR DATA

42 ⌐                                    ⌐ 44

40 ⌐

OUT2            OUT1

*Fig. 2*

| 54 ⌐ | 56 ⌐ | | 58 ⌐ | 60 ⌐ |
|---|---|---|---|---|
| 256 COLOUR | 16 COLOUR | | 256 COLOUR | 16 COLOUR |
| 0⁻15 | 0⁻15 | | 0⁻15 | 0 |
| 16⁻31 | 0⁻15 | | 16⁻31 | 1 |
| 32⁻47 | 0⁻15 | | 32⁻47 | 2 |
| 48⁻63 | 0⁻15 | | 48⁻63 | 3 |
| 64⁻79 | 0⁻15 | | 64⁻79 | 4 |
| 80⁻95 | 0⁻15 | | 80⁻95 | 5 |
| ⋮ | ⋮ | | ⋮ | ⋮ |
| COLOUR TABLE OUT1 | | | COLOUR TABLE OUT2 | |

50 ⌐                                    52 ⌐

*Fig. 3 (a)*

| 66 ⌐ | 68 ⌐ | | 70 ⌐ | 72 ⌐ |
|---|---|---|---|---|
| 256 COLOUR | 16 COLOUR | | 256 COLOUR | 16 COLOUR |
| 0 | 8 | | 0⁻15 | 8 |
| 1⁻7 | 1⁻7 | | 16⁻31 | 1 |
| 8 | 16 | | 32⁻47 | 2 |
| 9⁻15 | 9⁻15 | | 48⁻63 | 3 |
| 16 | 8 | | ⋮ | ⋮ |
| 17⁻23 | 1⁻7 | | 112⁻127 | 7 |
| 24 | 16 | | 128⁻143 | 16 |
| 25⁻31 | 9⁻15 | | 144⁻159 | 9 |
| ⋮ | ⋮ | | ⋮ | ⋮ |
| COLOUR TABLE | OUT1 | | COLOUR TABLE | OUT2 |

62 ⌐                                    64 ⌐

*Fig. 3(b)*

BEGIN

DEFINE LOOKUP
TABLE FOR 256
COLOUR OUTPUT  ~80

DEFINE COLOUR
TABLES FOR
INTERMEDIATE FILES  ~82

CAPTURE DESIRED
IMAGE IN
84~ INTERMEDIATE FILES

SEPARATE IMAGES
IN INTERMEDIATE
86~ FILES INTO
BITMAPS

COMBINE BITMAPS
88~ INTO FINAL FILE

GENERATE OUTPUT
90~ FROM FINAL FILE

END

*Fig. 4*

European Patent Office

## EUROPEAN SEARCH REPORT

Application Number

EP    91 30 0944

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4458330 (BRUCE E. IMSAND ET AL) <br> * abstract; figure 1 * <br> * column 6, lines 5 - 45 * | 1, 6 | G06F15/62 <br> H04N1/46 |
| A | EP-A-348651 (INTERNATIONAL BUSINESS MACHINES CORPORATION) <br> * column 2, line 2 - column 3, line 44 * <br> * figures 1, 2 * | 1, 6 | |
| A | International Conference on Acoustics, Speech and Signal Processing 1988 <br> vol. 2, 11 April 1988, New York <br> pages 753 - 756; Choon-Sung Kim et al: "Subband Coding of Color Images Using Finite State Vector Quantization" <br> * page 753, right-hand column, paragraph 3 * <br> * page 754, right-hand column, paragraph 4 - page 755, left-hand column, paragraph 1 * <br> * figures 1, 3 * | 1, 6 | |
| A | COMPUTERS AND GRAPHICS. <br> vol. 10, no. 2, 1986, OXFORD GB <br> pages 103 - 106; Jeffery H. Rowe: "Metafiles and Computer Graphics" <br> * page 104, right-hand column - page 106, left-hand column, paragraph 1; figures 2, 3 * | 1, 6 | TECHNICAL FIELDS SEARCHED (Int. Cl.5) <br><br> G06F <br> G09G <br> H04N |

The present search report has been drawn up for all claims

| Place of search | Date of completion of the search | Examiner |
|---|---|---|
| BERLIN | 22 MAY 1991 | NICHOLLS J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)